# FASCICULE DE BREVET EUROPEEN

(11) **EP 2 914 825 B1**
(45) Date de publication et mention de la délivrance du brevet: **14.09.2016**
(21) Numéro de dépôt: 13795821.1
(22) Date de dépôt: 22.10.2013
(51) Int. Cl.: F01N 13/00, B60K 13/04

(54) **ENSEMBLE POUR CHÂSSIS DE VEHICULE AUTOMOBILE FACILITANT L'IMPLANTATION D'UNE SONDE**
ANORDNUNG FÜR EINE KRAFTFAHRZEUGKAROSSERIE ZUR IMPLANTIERUNG EINER SONDE
ASSEMBLY FOR A MOTOR VEHICLE CHASSIS FACILITATING THE IMPLANTATION OF A PROBE

(30) Priorité: 05.11.2012 FR 1260470
(43) Date de publication de la demande: 09.09.2015
(73) Titulaire: PSA Peugeot Citroën Automobiles S.A., 78140 Velizy Villacoublay (FR)
(72) Inventeur: HENRY, Olivier, F-25400 Taillecourt (FR); CONVERS, Germain, F-25200 Bethoncourt (FR)
(86) Numéro de dépôt international: PCT/FR2013/052521
(87) Numéro de publication internationale: WO 2014/068221

(56) Documents cités:
- WO-A2-2007/142899
- DE-A1-102006 024 163
- FR-A1- 2 874 651
- US-A1- 2012 258 015

## Description

L'invention porte sur un ensemble pour châssis de véhicule automobile facilitant l'implantation d'une sonde, notamment d'une sonde de mesure d'une quantité d'oxydes d'azote contenus dans les gaz d'échappement dite sonde NOₓ, ainsi que sur le support de sonde correspondant.

Les véhicules thermiques sont soumis à des normes de dépollution contraignantes visant à limiter les émissions de polluants, tels que les oxydes d'azote. Afin de respecter ces réglementations, il est possible de développer des modes d'hybridation de la traction combinant l'utilisation d'énergies thermique et électrique et/ou de traiter les polluants après leur émission au moyen de systèmes dit de post-traitement.

On connaît ainsi des systèmes de post-traitement des oxydes d'azote dits systèmes SCR pour "Sélective Catalytic Réduction" en anglais traduit en français par réduction catalytique sélective. Ces systèmes permettent de réduire chimiquement les oxydes d'azote en ajoutant dans la ligne d'échappement un agent réducteur, par exemple de l'ammoniac, en amont d'un catalyseur spécifique. De tels systèmes font appel à une sonde appelée sonde NOₓ permettant de mesurer une quantité d'oxydes d'azote présents dans les gaz d'échappement.

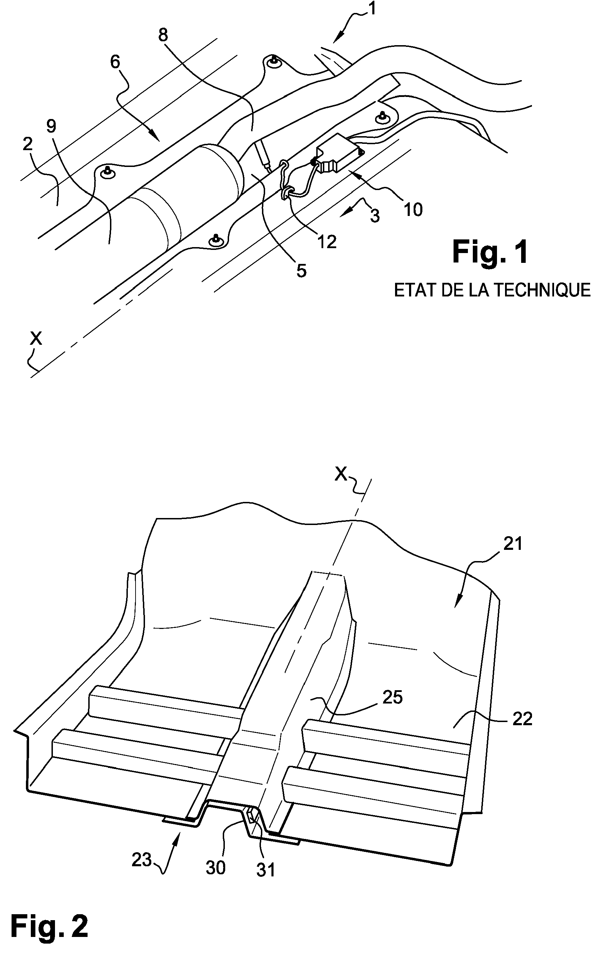

Dans les véhicules existants, il est connu d'implanter la sonde sous le plancher du véhicule. Ainsi, la figure 1 montre un ensemble 1 pour un châssis de véhicule selon l'état de la technique comportant un plancher 2 d'un véhicule automobile s'étendant sensiblement le long du véhicule suivant un axe longitudinal X. Ce plancher 2 présente une face interne 3 destinée à être orientée vers le sol en condition de roulage du véhicule. Un tunnel 5 s'étendant suivant l'axe longitudinal X est aménagé dans le plancher 2. Ce tunnel 5 est conformé pour recevoir une ligne d'échappement 6 des gaz brûlés durant la combustion dans le moteur thermique. Cette ligne d'échappement 6 comprend notamment un conduit d'échappement 8 et des catalyseurs 9 du système SCR. Une sonde NOₓ référencée 10 est fixée à la face interne 3 du plancher 2 à côté du tunnel 5 de passage de la ligne d'échappement 6.

Le document WO2007/142899 décrit un ensemble selon le préambule de la revendication 1.

Une telle configuration présente plusieurs inconvénients. Tout d'abord, la sonde 10 est exposée aux projections de gravier et d'eau issues de la route, ce qui oblige à la protéger par exemple au moyen d'un capot de protection. En outre, il est nécessaire d'utiliser des organes de maintien 12 afin d'éviter que le faisceau électrique relié à la sonde 10 pende sous la caisse du véhicule. L'opérateur doit également prévoir lors des opérations de montage une étape manuelle de fixation de la sonde 10 au plancher 2 du véhicule qui est longue et couteuse à réaliser.

L'invention vise à remédier en tout ou partie à ces inconvénients en proposant un ensemble pour châssis de véhicule automobile comportant:
- un plancher de véhicule destiné à s'étendre sensiblement le long du véhicule suivant un axe longitudinal,
- un tunnel de passage d'une ligne d'échappement aménagé dans le plancher de véhicule s'étendant suivant l'axe longitudinal,
- un écran de protection thermique destiné à être positionné le long de la ligne d'échappement, et
- une sonde de mesure d'oxydes d'azote,
et qui comporte en outre un support portant la sonde positionné entre l'écran de protection thermique et le tunnel de sorte que l'écran de protection thermique et le tunnel délimitent un logement pour la sonde et son support.

Ainsi, le support portant la sonde NOₓ étant associé à l'écran de protection thermique, il sera possible de fixer ensemble l'écran de protection thermique et la sonde au châssis du véhicule au cours d'une même opération. On économise ainsi une étape de montage manuelle. En outre, la sonde est protégée par l'écran et le tunnel délimitant son logement, de sorte qu'il est possible de supprimer le capot de protection utilisé dans les configurations existantes. Le faisceau électrique relié à la sonde pourra également être guidé entre les parois de l'écran de protection thermique et le tunnel, ce qui évite de faire appel à un organe de maintien du faisceau.

Selon une réalisation, le support portant la sonde est plaqué contre une face de l'écran de protection thermique tournée vers le tunnel.

Selon une réalisation, le support présente une direction d'extension longitudinale s'étendant transversalement par rapport à une direction d'extension longitudinale de l'écran de protection thermique.

Selon une réalisation, le support présente une configuration telle qu'il épouse globalement la forme d'un contour transversal de l'écran de protection thermique.

Selon une réalisation, l'ensemble comporte des moyens d'indexage du support et de l'écran de protection thermique par rapport à un porte organe mécanique.

Selon une réalisation, le support et l'écran de protection thermique présentent des ouvertures destinées à coopérer avec des pions de centrage du porte organe mécanique.

Selon une réalisation, l'ensemble comporte des moyens d'indexage du support, de l'écran de protection thermique et d'un porte organe mécanique par rapport au châssis du véhicule.

Selon une réalisation, le support et l'écran de protection thermique présentent des ouvertures destinées à coopérer avec des pions de centrage du porte organe mécanique par lesquelles sont destinés à passer des moyens de fixation pour l'assemblage du support et de l'écran de protection thermique avec le tunnel.

Selon une réalisation, l'ensemble comporte en outre des moyens de maintien du support sur l'écran de protection thermique.

Selon une réalisation, les moyens de maintien sont formés par des, notamment deux, rivets en plastique.

Selon une réalisation, l'écran de protection thermique présente un aménagement permettant un passage sécurisé d'un faisceau relié à la sonde sous le plancher de véhicule constitué par une surélévation d'une bordure longitudinale de l'écran de protection thermique par rapport à une partie de la bordure longitudinale sur laquelle est positionné le support.

Selon une réalisation, le support comporte une partie centrale ayant une section sensiblement en forme de U inversé et deux bras s'étendant de part et d'autre de la partie centrale.

Selon une réalisation, la sonde est fixée sur une paroi latérale de la partie centrale du support.

L'invention a également pour objet un support pour sonde de mesure d'oxydes d'azote qui comporte une partie centrale ayant une section sensiblement en forme de U inversé et deux bras s'étendant de part et d'autre de la partie centrale pour son positionnement sur un écran de protection thermique.

L'invention sera mieux comprise à la lecture de la description qui suit et à l'examen des figures qui l'accompagnent. Ces figures ne sont données qu'à titre illustratif mais nullement limitatif de l'invention.
- La figure 1, déjà décrite, montre une vue en perspective de la partie inférieure d'un plancher de véhicule automobile intégrant une sonde NOₓ suivant une configuration de l'état de la technique ;
- La figure 2 montre une vue en perspective de la partie supérieure d'un ensemble pour châssis de véhicule automobile selon l'invention;
- La figure 3 représente une vue de dessous de l'ensemble pour châssis de véhicule selon l'invention;
- La figure 4 montre une vue en perspective détaillée de l'implantation de la sonde NOx et de son support entre l'écran de protection thermique et le tunnel de l'ensemble pour châssis selon l'invention;
- La figure 5 représente une vue en perspective de la sonde NOx et de son support plaqué contre l'écran de protection thermique de l'ensemble pour châssis selon l'invention;
- La figure 6 représente une vue en perspective de la sonde NOₓ et de son support utilisés avec l'ensemble pour châssis selon l'invention;
- La figure 7 montre une vue en perspective d'un écran de protection thermique d'un ensemble pour châssis selon l'invention portant le support de la sonde NOₓ installé sur un porte organe mécanique;
- Les figures 8a et 8b représentent des vues en perspective détaillées du support de la sonde NOₓ et de l'écran de protection thermique positionnés sur le porte organe mécanique de la figure 7 suivant deux angles de vue opposés.

Les éléments identiques, similaires, ou analogues conservent la même référence d'une figure à l'autre.

Les figures 2, 3 et 4 montrent un ensemble 21 pour châssis de véhicule automobile comportant un plancher 22 d'un véhicule automobile s'étendant sensiblement le long du véhicule suivant un axe longitudinal X. Ce plancher 22 présente une face interne 23. Dans la description, on entend par "face interne" une face destinée à être orientée vers le sol en condition de roulage du véhicule et par "face externe" une face destinée à être orientée du côté opposé au sol en condition de roulage du véhicule, c'est-à-dire du côté de l'habitacle du véhicule.

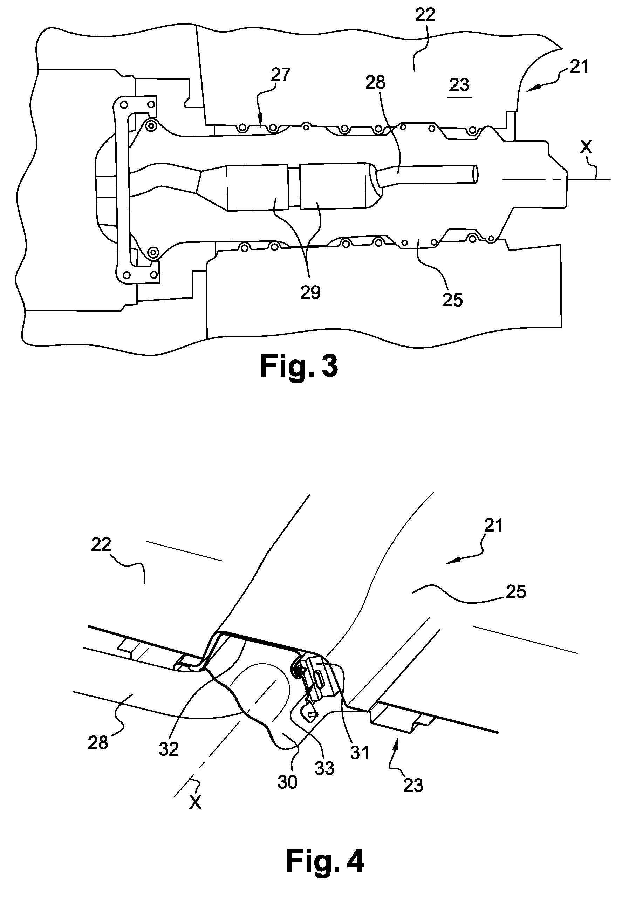

L'ensemble 21 comporte également un tunnel 25 aménagé dans le plancher 22 s'étendant suivant l'axe X. Comme cela est bien visible sur la figure 3, ce tunnel 25 est conformé pour recevoir une ligne d'échappement 27 des gaz brûlés durant la combustion dans le moteur thermique. Cette ligne d'échappement 27 comprend notamment un conduit d'échappement 28 et des catalyseurs 29 appartenant à un système de type SCR permettant de réduire chimiquement les oxydes d'azote présents dans les gaz d'échappement. Le tunnel 25 présente une section transversale en forme de U inversé lorsque le véhicule est en condition de roulage. Un écran 30 de protection thermique montré sur les figures 2 et 4 est positionné le long de la ligne d'échappement 27 entre la ligne d'échappement 27 et le tunnel 25. Cet écran 30 est réalisé par exemple en aluminium et/ou en feutre résiné.

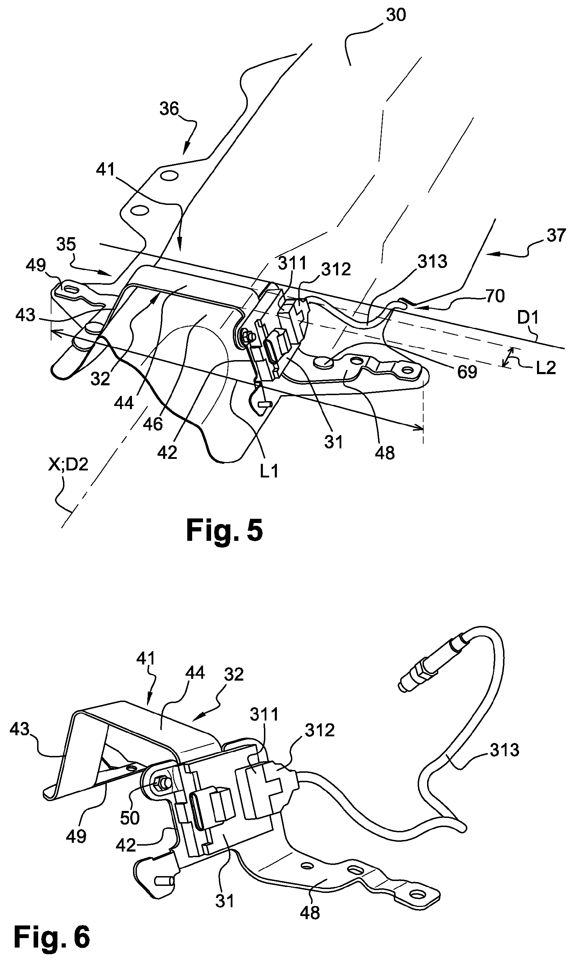

Par ailleurs, comme cela est bien visible sur les figures 4, 5 et 6, une sonde de mesure 31 d'oxydes d'azote utilisée avec le système SCR, dite sonde NOₓ, est portée par un support 32. Cette sonde 31 comporte un connecteur 311 destiné à coopérer avec un connecteur 312 de forme complémentaire relié à un faisceau 313 (cf. figures 5 et 6).

Comme cela est bien visible sur la figure 4, le support 32 est plaqué contre une face externe de l'écran 30 destinée à être tournée vers le tunnel 25. Le support 32 et la sonde 31 sont positionnés entre une face externe de l'écran 30 et une face interne du tunnel 25 en regard l'une de l'autre. Le tunnel 25 et l'écran 30 délimite ainsi un logement 33 pour la sonde 31 et son support 32 de sorte que la sonde 31 est protégée des projections d'eau et de graviers provenant de la route.

Comme montré sur la figure 5, le support 32 présente une direction D1 d'extension longitudinale s'étendant transversalement par rapport à une direction D2 d'extension longitudinale de l'écran 30 confondue avec l'axe X.

Plus précisément, le support 32 présente une configuration telle qu'il épouse globalement la forme d'un contour 35 transversal de l'écran 30 de protection thermique. Ce contour 35 s'étend suivant la direction D1 sensiblement perpendiculaire à l'axe X entre les extrémités de deux bordures longitudinales 36, 37 de l'écran 30 ainsi que suivant la direction D2 sur une distance réduite, c'est-à-dire que le contour 35 s'étend suivant la direction D2 sur une distance L2 qui est inférieure à la distance L1 séparant les extrémités des bordures 36 et 37 et mesurée suivant la direction D1. Par "épouser la forme", on entend le fait que les parois du support 32 suivent globalement la forme des parois de l'écran 30 formant le contour transversal 35.

En l'occurrence, comme visible sur les figures 5 et 6, le support 32 comporte une partie centrale 41 ayant une section en forme de U inversé ayant deux parois latérales 42, 43 en vis-à-vis reliée entre elles par une paroi de liaison 44. Les parois latérales 42, 43 et la paroi de liaison 44 sont destinées à être plaquées contre des faces externes de parois d'une portion centrale 46 de l'écran 30 ayant des formes correspondantes. Ce support 32 comporte également deux bras 48 et 49 s'étendant de part et d'autre de la partie centrale 41. Ces bras 48 et 49 sont destinés à être plaqués contre des faces externes des bordures longitudinales 36, 37 de l'écran 30 situées de part et d'autre de la portion centrale 46.

La sonde NOₓ 31 est fixée sur une des parois latérales 42 de la partie centrale 41 du côté opposé au creux du U. A cet effet, la paroi 42 portant la sonde 31 présente une largeur supérieure à la paroi opposée 43 pour permettre un placage efficace de la sonde 31 contre le support 32. La sonde 31 est en l'occurrence fixée au support 32 au moyen d'un système vis-écrou 50. En variante, on pourrait utiliser tout autre moyen de fixation adapté, comme par exemple des moyens de collage. Dans un exemple de réalisation, le support 32 est réalisé en métal, de sorte qu'il sera possible obtenir aisément les formes précitées par emboutissage.

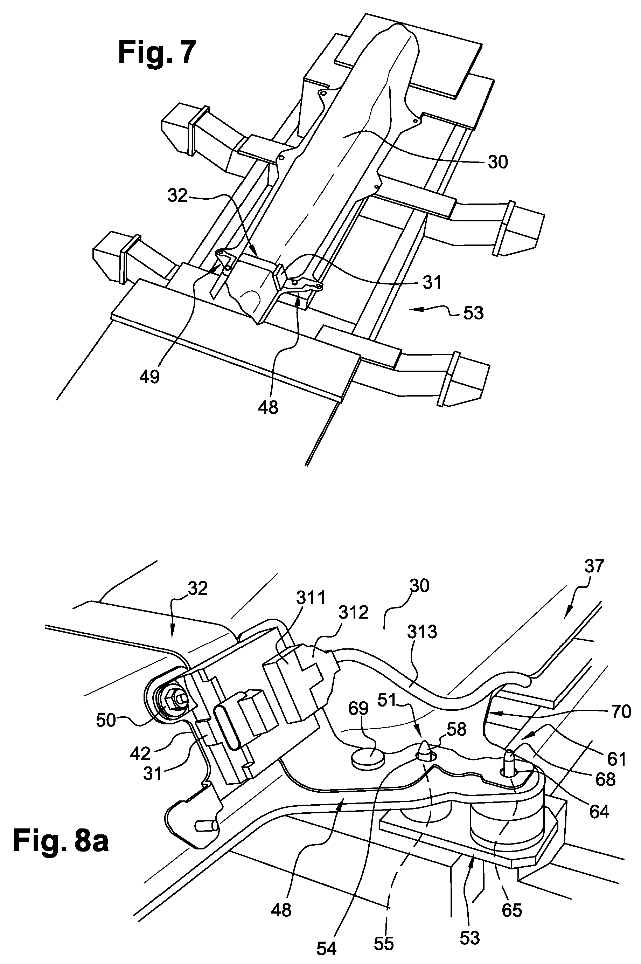

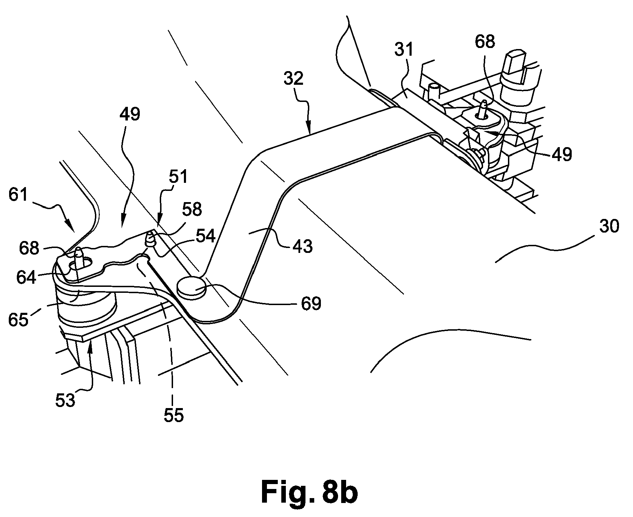

De préférence, comme cela est bien visible sur les figures 8a et 8b correspondant à des vues détaillées de la figure 7, on utilise des moyens d'indexage 51 de l'ensemble formé par le support 32 et l'écran 30 par rapport à un porte organe mécanique 53. En l'occurrence, ces moyens d'indexage 51 sont formés par des ouvertures 54, 55 réalisées respectivement dans le support 32 et l'écran 30 destinées à coopérer avec des pions de centrage 58 appartenant au porte organe mécanique 53. Le porte organe mécanique 53 comporte ici deux pions 58 pour l'indexage de l'ensemble. Ce nombre pourra en variante être supérieur à deux. Cela dépend de la configuration de l'ensemble 21. Les ouvertures 54, 55 présentent avantageusement une forme oblongue.

Par ailleurs, des moyens d'indexage 61 assurent le positionnement de l'ensemble formé par le support 32 et l'écran 30 et du porte organe mécanique 53 par rapport au châssis du véhicule. En l'occurrence, ces moyens d'indexage 61 sont formés par des ouvertures 64, 65 réalisées respectivement dans le support 32 et l'écran 30 destinées à coopérer avec des pions de centrage 68, ici au nombre de deux, appartenant au porte organe mécanique 53. Ces ouvertures 64, 65 autoriseront ensuite le passage de moyens de fixation, tels que des vis, afin d'assembler en même temps l'écran 30 et le support 32 au tunnel 25. Les ouvertures 64, 65 présentent avantageusement une forme oblongue. Comme pour les pions de centrage 58, le nombre de pions de centrage 68 pourra varier en fonction de la configuration de l'ensemble.

Par ailleurs, des moyens de maintien 69 permettent de garantir le positionnement correct du support 32 sur l'écran 30 lors de la manipulation du porte organe mécanique 53. Dans un exemple de réalisation, les moyens de maintien 69 sont formés par deux rivets en plastique. En variante, on pourrait utiliser tout autre élément permettant le maintien du support 32 sur l'écran 30 lors des opérations de montage, tel que des vis.

L'écran 30 de protection thermique présente avantageusement un aménagement 70 bien visible sur les figures 5 et 8a permettant de protéger le passage du faisceau de la sonde 31 sous le châssis du véhicule. Cet aménagement 70 est constitué par une surélévation de la bordure longitudinale 37 de l'écran 30 par rapport à la partie de la bordure 37 portant le support 32. En outre, la tôle de l'écran 30 est retournée au niveau de ses bords pour éviter de blesser la gaine du faisceau 313.

On décrit ci-après le montage de l'écran 30 de protection thermique et du support 32 de la sonde sur le châssis du véhicule.

Le faisceau 313 ayant été préalablement relié à la ligne d'échappement 27, le connecteur 312 est maintenu en position sur le porte organe mécanique 53 pour son assemblage ultérieur avec la sonde 31.

Ensuite, la sonde 31 ayant été fixée par vissage sur le support 32, l'ensemble formé par l'écran 30 et le support 32 est positionné sur le porte organe mécanique 53 via les moyens d'indexage 51. A cet effet, on fait pénétrer les pions de centrage 58 à l'intérieur des ouvertures 54, 55 correspondantes du support 32 et de l'écran 30. Cela permet de positionner de manière contrôlée et précise le support 32 et la sonde 31 sur l'écran 30.

On s'assure également que les ouvertures 64, 65 du support 32 et de l'écran 30 coopèrent avec les pions de centrage 68 pour permettre le centrage de l'ensemble par rapport au châssis du véhicule.

Le support 32 est ensuite maintenu en position sur l'écran 30 par la mise en place manuelle des rivets 69 en plastique. On garantit ainsi la tenue et l'orientation du support 32 par rapport à l'écran 30 lors des manipulations du porte organe mécanique 53.

L'ensemble est piloté automatiquement de manière à être positionné à proximité du châssis du véhicule. Les moyens d'indexage 61 permettront d'obtenir un déplacement précis du porte organe mécanique 53. L'écran 30 et le support 32 sont ensuite fixés ensemble au tunnel 25 au cours d'une même opération. A cet effet, des moyens de fixation, prenant par exemple la forme de vis, sont introduits à l'intérieur des ouvertures 64, 65 ménagées dans l'écran 30 et le support 32 et vissés par l'opérateur au moyen d'une visseuse. Le connecteur 312 du faisceau 313 reposant sur le porte organe mécanique 53 est relié au connecteur 311 porté par la sonde 31 en faisant passer le faisceau 313 sous la partie surélevée 70. Le faisceau 313 sera maintenu en position par exemple au moyen d'agrafes non représentées sur les figures.

Bien entendu, l'homme du métier pourra modifier la structure de l'ensemble précédemment décrit sans sortir du cadre de l'invention. Ainsi, dans le cas où l'écran 30 présente une autre forme, telle qu'une forme en arc de cercle, le support 32 de la sonde 31 présente également une autre forme correspondant à celle de l'écran 30. En outre, le nombre et la forme des moyens d'indexage 51, 61, des moyens de maintien 69, et des moyens de fixation de l'écran 30 et du support 32 au tunnel 25 pourront également varier en fonction de l'application.

## Revendications

1. Ensemble (21) pour châssis de véhicule automobile comportant:
- un plancher de véhicule (22) destiné à s'étendre sensiblement le long du véhicule suivant un axe longitudinal (X),
- un tunnel (25) de passage d'une ligne d'échappement (27) aménagé dans le plancher de véhicule (22) s'étendant suivant l'axe longitudinal (X),
- un écran (30) de protection thermique destiné à être positionné le long de la ligne d'échappement (27), et
- une sonde (31) de mesure d'oxydes d'azote,
**caractérisé en ce qu'**il comporte en outre un support (32) portant la sonde (31) positionné entre l'écran (30) de protection thermique et le tunnel (25), de sorte que l'écran (30) de protection thermique et le tunnel (25) délimitent un logement (33) pour la sonde (31) et son support (32).

2. Ensemble selon la revendication précédente, **caractérisé en ce que** le support (32) portant la sonde est plaqué contre une face de l'écran (30) de protection thermique tournée vers le tunnel (25).

3. Ensemble selon l'une des revendications précédentes, **caractérisé en ce que** le support (32) présente une direction (D1) d'extension longitudinale s'étendant transversalement par rapport à une direction (D2) d'extension longitudinale de l'écran de protection thermique.

4. Ensemble selon l'une des revendications précédentes, **caractérisé en ce que** le support (32) présente une configuration telle qu'il épouse globalement la forme d'un contour (35) transversal de l'écran (30) de protection thermique.

5. Ensemble selon l'une des revendications précédentes, **caractérisé en ce qu'**il comporte des moyens d'indexage (51) du support (32) et de l'écran (30) de protection thermique par rapport à un porte organe mécanique (53).

6. Ensemble selon la revendication 5, **caractérisé en ce que** le support (32) et l'écran (30) de protection thermique présentent des ouvertures (54, 55) destinées à coopérer avec des pions (58) de centrage du porte organe mécanique (53).

7. Ensemble selon l'une des revendications précédentes, **caractérisé en ce qu'**il comporte des moyens d'indexage (61) du support (32), de l'écran (30) de protection thermique et d'un porte organe mécanique (53) par rapport au châssis du véhicule.

8. Ensemble selon la revendication 7, **caractérisé en ce que** le support (32) et l'écran (30) de protection thermique présentent des ouvertures (64, 65) destinées à coopérer avec des pions de centrage (68) du porte organe mécanique (53) par lesquelles sont destinés à passer des moyens de fixation pour l'assemblage du support (32) et de l'écran (30) de protection thermique avec le tunnel (25).

9. Ensemble selon l'une des revendications précédentes, **caractérisé en ce qu'**il comporte en outre des moyens de maintien (69) du support (32) sur l'écran (30) de protection thermique.

10. Ensemble selon l'une des revendications précédentes, **caractérisé en ce que** l'écran (30) de protection thermique présente un aménagement (70) permettant un passage sécurisé d'un faisceau (313) relié à la sonde (31) sous le plancher de véhicule (22) constitué par une surélévation d'une bordure longitudinale (37) de l'écran (30) de protection thermique par rapport à une partie de la bordure longitudinale (37) sur laquelle est positionné le support (32).

## Patentansprüche

1. Anordnung (21) für Kraftfahrzeugchassis, die Folgendes umfasst:
- einen Fahrzeugboden (22), der dazu bestimmt ist, sich im Wesentlichen entlang des Fahrzeugs entlang der Längsachse (X) zu erstrecken,
- einen Tunnel (25) zum Durchgehen eines Auspuffstrangs (27), der in dem Fahrzeugfußboden (22), der sich entlang der Längsachse (X) erstreckt, eingerichtet ist,
- einen Wärmeschutzschirm, der dazu bestimmt ist, entlang des Auspuffstrangs (27) positioniert zu sein, und
- eine Stickstoffoxid-Messsonde (31),
**dadurch gekennzeichnet, dass** sie außerdem einen Träger (32) umfasst, der die Sonde (31) trägt, die zwischen dem Wärmeschutzschirm (30) und dem Tunnel (35) derart angeordnet ist, dass der Wärmeschutzschirm (30) und der Tunnel (25) eine Aufnahme (33) für die Sonde (31) und ihren Träger (32) abgrenzen.

2. Anordnung nach dem vorhergehenden Anspruch, **dadurch gekennzeichnet, dass** der Träger (32), der die Sonde trägt, gegen eine Seite des Wärmeschutzschirms (30), die zu dem Tunnel (25) gerichtet ist, gedrückt ist.

3. Anordnung nach einem der vorhergehenden Ansprüche, **dadurch gekennzeichnet, dass** der Träger (32) eine Längsausdehnungsrichtung (D1) aufweist, die sich in Bezug zu einer Längsausdehnungsrichtung (D2) des Wärmeschutzschirms quer erstreckt.

4. Anordnung nach einem der vorhergehenden Ansprüche, **dadurch gekennzeichnet, dass** der Träger (32) eine Konfiguration derart aufweist, dass er sich global an die Form einer Querkontur (35) des Wärmeschutzschirms (30) schmiegt.

5. Anordnung nach einem der vorhergehenden Ansprüche, **dadurch gekennzeichnet, dass** sie Positionierungsmittel (51) des Trägers (32) und des Wärmeschutzschirms (30) in Bezug zu einem mechanischen Organträger (53) umfasst.

6. Anordnung nach Anspruch 5, **dadurch gekennzeichnet, dass** der Träger (32) und der Wärmeschutzschirm (30) Öffnungen (54, 55) aufweisen, die dazu bestimmt sind, mit Zentrierstiften (58) des mechanischen Organträgers (53) zusammenzuwirken.

7. Anordnung nach einem der vorhergehenden Ansprüche, **dadurch gekennzeichnet, dass** sie Positionierungsmittel (61) des Trägers (32), des Wärmeschutzschirms (30) und eines mechanischen Organträgers (53) in Bezug zu dem Chassis des Fahrzeugs umfasst.

8. Anordnung nach Anspruch 7, **dadurch gekennzeichnet, dass** der Träger (32) und der Wärmeschutzschirm (30) Öffnungen (64, 65) aufweisen, die dazu bestimmt sind, mit Zentrierstiften (68) des mechanischen Organträgers (53) zusammenzuwirken, durch welche Befestigungsmittel zum Zusammenfügen des Trägers (32) und des Wärmeschutzschirms (30) mit dem Tunnel (25) durchgehen sollen.

9. Anordnung nach einem der vorhergehenden Ansprüche, **dadurch gekennzeichnet, dass** sie außerdem Haltemittel (69) des Trägers (32) auf dem Wärmeschutzschirm (30) umfasst.

10. Baugruppe nach einem der vorhergehenden Ansprüche, **dadurch gekennzeichnet, dass** der Wärmeschutzschirm (30) eine Einrichtung (70) aufweist, die ein gesichertes Durchgehen eines Kabelbündels (313), das mit der Sonde (31) unter dem Fahrzeugfußboden (22) verbunden ist, der aus einer Überhöhung eines Längsrands (37) des Wärmeschutzschirms (30) in Bezug zu einem Teil des Längsrands (37), auf dem der Träger (32) positioniert ist, gebildet ist, erlaubt.

## Claims

1. An assembly (21) for a motor vehicle chassis comprising:
- a vehicle floor (22) intended to extend substantially along the vehicle following a longitudinal axis (X),
- a passage tunnel (25) for an exhaust line (27) provided in the vehicle floor (22), extending along the longitudinal axis (X),
- a thermal protection screen (30) intended to be positioned along the exhaust line (27), and
- a probe (31) for measuring nitrogen oxides,
**characterized in that** it further comprises a support (32) carrying the probe (31) positioned between the thermal protection screen (30) and the tunnel (25), such that the thermal protection screen (30) and the tunnel (25) define a housing (33) for the probe (31) and the support (32) thereof.

2. The assembly according to the preceding claim, **characterized in that** the support (32) carrying the probe is placed flat against a face of the thermal protection screen (30) turned towards the tunnel (25).

3. The assembly according to one of the preceding claims, **characterized in that** the support (32) has a longitudinal extension direction (D1) extending transversely with respect to a longitudinal extension direction (D2) of the thermal protection screen.

4. The assembly according to one of the preceding claims, **characterized in that** the support (32) has a configuration such that it fits overall the shape of a transverse contour (35) of the thermal protection screen (30).

5. The assembly according to one of the preceding claims, **characterized in that** it comprises indexing means (51) of the support (32) and of the thermal protection screen (30) with respect to a mechanical component carrier (53).

6. The assembly according to Claim 5, **characterized in that** the support (32) and the thermal protection screen (30) have openings (54, 55) intended to cooperate with centring pins (58) of the mechanical component carrier (53).

7. The assembly according to one of the preceding claims, **characterized in that** it comprises indexing means (61) of the support (32), of the thermal protection screen (30) and of a mechanical component carrier (53) with respect to the chassis of the vehicle.

8. The assembly according to Claim 7, **characterized in that** the support (32) and the thermal protection screen (30) have openings (64, 65) intended to cooperate with centring pins (68) of the mechanical component carrier (53) by which attachment means are intended to pass for the assembly of the support (32) and of the thermal protection screen (30) with the tunnel (25).

9. The assembly according to one of the preceding claims, **characterized in that** it further comprises holding means (69) of the support (32) on the thermal protection screen (30).

10. The assembly according to one of the preceding claims, **characterized in that** the thermal protection screen (30) has an arrangement (70) permitting a secured passage of a harness (313) connected to the probe (31) under the vehicle floor (22) constituted by an elevation of a longitudinal edge (37) of the thermal protection screen (30) with respect to a portion of the longitudinal edge (37) on which the support (32) is positioned.
